# EUROPEAN PATENT SPECIFICATION

(11) **EP 4 432 708 B1**
(45) Date of publication and mention of the grant of the patent: **28.10.2026**
(21) Application number: 22889481.2
(22) Date of filing: 08.11.2022
(51) Int. Cl.: H04W 4/16, H04L 51/214

(54) **INFORMATION SENDING METHOD, INFORMATION SENDING APPARATUS, AND ELECTRONIC DEVICE**
INFORMATIONSSENDEVERFAHREN, INFORMATIONSSENDEVORRICHTUNG UND ELEKTRONISCHE VORRICHTUNG
PROCÉDÉ D'ENVOI D'INFORMATIONS, APPAREIL D'ENVOI D'INFORMATIONS, ET DISPOSITIF ÉLECTRONIQUE

(30) Priority: 08.11.2021 CN 202111315055
(43) Date of publication of application: 18.09.2024
(73) Proprietor: Vivo Mobile Communication Co., Ltd., Dongguan, Guangdong 523863 (CN)
(72) Inventor: ZHU, Chengcheng, Dongguan, Guangdong 523863 (CN)
(74) Representative: Lavoix
(86) International application number: PCT/CN2022/130643
(87) International publication number: WO 2023/078460

(56) References cited:
- CN-A- 112 202 582
- CN-A- 113 079 084
- CN-A- 113 300 938
- CN-A- 114 095 886
- US-A1- 2011 143 713
- US-A1- 2013 072 153
- US-A1- 2019 166 251
- US-A1- 2020 213 290

## Description

### TECHNICAL FIELD

This application pertains to the field of communication technologies, and specifically relates to an information sending method, an electronic device, a readable storage medium and a computer program product.

### BACKGROUND

For existing communication tools, when it is inconvenient for a user to reply to information sent by an opposite party, the user usually needs to manually reply to the opposite party to contact a third party, so as to forward a message or perform work transfer. Alternatively, the user may manually forward the message to the third party. After receiving the message, the third party actively finds the opposite party to reply to the message, so as to perform working processing. In the foregoing method, not only the operation is complex, but also a large amount of time and energy is consumed. In addition, this easily causes impact on daily work and life due to a fact that the user cannot reply to the message in a timely manner, and user experience is poor.
US20130072153A1 discloses a method for connecting a call to a client

### SUMMARY

The invention is set out in the appended set of claims. Embodiments of this application aim to provide an information sending method, and an electronic device, to solve the problem of poor user experience in a case that it is inconvenient to reply to information.

In embodiments of this application, the target information sent by the second electronic device to the first electronic device is sent to the third electronic device corresponding to the second electronic device, and the communication connection between the second electronic device and the third electronic device is established. In this way, in a case that it is inconvenient for a user A to communicate with a user C, the user A does not need to manually forward target information, and then a user B can receive the target information, so that the user B can reply to the target information of the user C in a timely manner. In addition, the user A does not need to manually remind the user C to contact the user B, and then a communication relationship between the user C and the user B may be automatically established in a timely manner. This helps to avoid inconvenience caused to daily work and life due to a fact that the information is not processed in a timely manner. The operation is simple and fast, and user experience is significantly improved.

### BRIEF DESCRIPTION OF DRAWINGS

FIG. 1 is a first schematic flowchart of an information sending method according to an embodiment of this application;
FIG. 2 is a second schematic flowchart of an information sending method according to an embodiment of this application;
FIG. 3 is a third schematic flowchart of an information sending method according to an embodiment of this application;
FIG. 4 is a first schematic interface diagram of an information sending method according to an embodiment of this application;
FIG. 5 is a second schematic interface diagram of an information sending method according to an embodiment of this application;
FIG. 6 is a third schematic interface diagram of an information sending method according to an embodiment of this application;
FIG. 7 is a fourth schematic interface diagram of an information sending method according to an embodiment of this application;
FIG. 8 is a first schematic structural diagram of a first electronic device according to an embodiment of this application;
FIG. 9 is a second schematic structural diagram of a third electronic device according to an embodiment of this application;
FIG. 10 is a schematic structural diagram of an electronic device according to an embodiment of this application; and
FIG. 11 is a schematic diagram of a hardware structure of an electronic device according to an embodiment of this application.

### DESCRIPTION OF EMBODIMENTS

The following clearly describes technical solutions in embodiments of this application with reference to the accompanying drawings in the embodiments of this application. However, the invention is solely defined by the appended claims.

The terms "first", "second", and the like in this specification and claims of this application are used to distinguish between similar objects instead of describing a specific order or sequence. It should be understood that data used in such a way may be interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

With reference to the accompanying drawings, an information sending method, an information sending apparatus, an electronic device, and a readable storage medium provided in the embodiments of this application are described in detail by using specific embodiments and application scenarios of the embodiments.

The information sending method may be applied to a terminal, and may be specifically performed by hardware or software in the terminal. The information sending method may be performed by the terminal, a control apparatus of the terminal, or the like.

The terminal includes but is not limited to another portable communication device such as a mobile phone or a tablet computer that has a touch-sensitive surface (for example, a touchscreen display and/or a touchpad). It should be further understood that, in some embodiments, the terminal may not be a portable communication device, but a desktop computer that has a touch-sensitive surface (for example, a touchscreen display and/or a touchpad).

The following embodiments describe a terminal that includes a display and a touch-sensitive surface. However, it should be understood that the terminal may include one or more other physical user interface devices such as a physical keyboard, a mouse, and a joystick.

The terminal may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device having a wireless communication function, such as a refrigerator, a television, a washing machine, or a furniture), a game console, a personal computer (personal computer, PC), a teller machine, or a self-service machine. The wearable device includes a smart watch, a smart band, a smart headset, smart glasses, smart jewelry (a smart bracelet, a smart hand chain, a smart ring, a smart necklace, a smart anklet, a smart ankle chain, and the like), a smart wristband, smart clothes, and the like. It should be noted that a specific type of the terminal is not limited in the embodiments of this application. The network side device may include an access network device or a core network device. The access network device may also be referred to as a radio access network device, a radio access network (Radio Access Network, RAN), a radio access network function, or a radio access network unit. The access network device may include a base station, a WLAN access node, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (transmission reception point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited. The core network device may include but be not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in the embodiments of this application, only a core network device in an NR system is used as an example for description, and a specific type of the core network device is not limited.

An embodiment of this application provides an information sending method. The information sending method may be performed by a terminal, including but not limited to a mobile terminal such as a mobile phone, a tablet computer, or a watch, and a non-mobile terminal such as a computer; or may be performed by a control apparatus of the terminal, or the like.

It should be noted that the information sending method may be applied to a social application environment.

When the terminal works normally, a user may open a target social application (application, APP).

The target social application may be an APP with an instant messaging function, such as an instant messaging APP. The target social application may support a one-on-one chat, or may support a group chat, which is not limited herein.

It may be understood that, in a related technology, a user C sends chat information to a user A through a terminal. In a case that it is inconvenient for the user A to reply, the user A needs to manually forward the chat information sent by the user C to a terminal of a user B, so that the user B can see the chat information sent by the user C and process the chat information. This operation is relatively complex, and it cannot be ensured that the user A can see the chat information in a timely manner and forward the chat information to the user B.

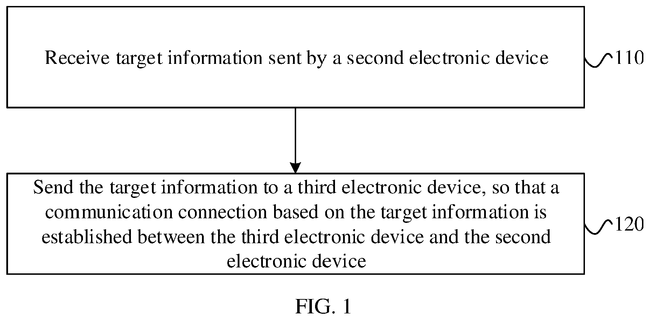

As shown in FIG. 1, an embodiment of this application provides an information sending method, applied to a first electronic device. The method includes steps 110 and 120.

Step 110: Receive target information sent by a second electronic device.

This step is performed by the first electronic device.

The first electronic device is an electronic device corresponding to the user A, the second electronic device is an electronic device corresponding to the user C, and a third electronic device is an electronic device corresponding to the user B.

In an actual execution process, the first electronic device, the second electronic device, and the third electronic device may be mobile electronic devices such as a mobile phone, a watch, an in-vehicle electronic device, and a tablet computer; or may be non-mobile electronic devices such as a desktop computer.

The target information is information generated by the second electronic device, namely, information sent by the user C to the user A.

The target information includes but is not limited to text information, image information, audio information, document text information, and other information.

It should be noted that there may be one or more second electronic devices.

There may be one or more pieces of target information.

In addition, there may be one or more pieces of target information corresponding to a same second electronic device.

In an actual execution process, the target information is edited by the user C, and then the target information is sent to the first electronic device corresponding to the user A through the second electronic device corresponding to the user C.

After receiving the target information, the first electronic device corresponding to the user A performs step 120.

Step 120: Send the target information to the third electronic device, so that a communication connection based on the information is established between the third electronic device and the second electronic device.

In this step, in a case that the first electronic device receives the target information, the target information is forwarded to the third electronic device.

The third electronic device is an electronic device that is determined by the first electronic device and that has a communication connection relationship with the second electronic device. Within a time period in which a correspondence exists, the third electronic device may receive all information sent by the second electronic device to the first electronic device.

In other words, the third electronic device is an electronic device specified by the user A.

After receiving the target information, the first electronic device of the user A sends the target information to the third electronic device of the user B.

After receiving the target information, the third electronic device of the user B establishes a communication connection with the second electronic device of the user C. The third electronic device may directly send reply information to the second electronic device, and the second electronic device may bypass the first electronic device and directly send information to the third electronic device. In other words, the user B may directly communicate with the user C.

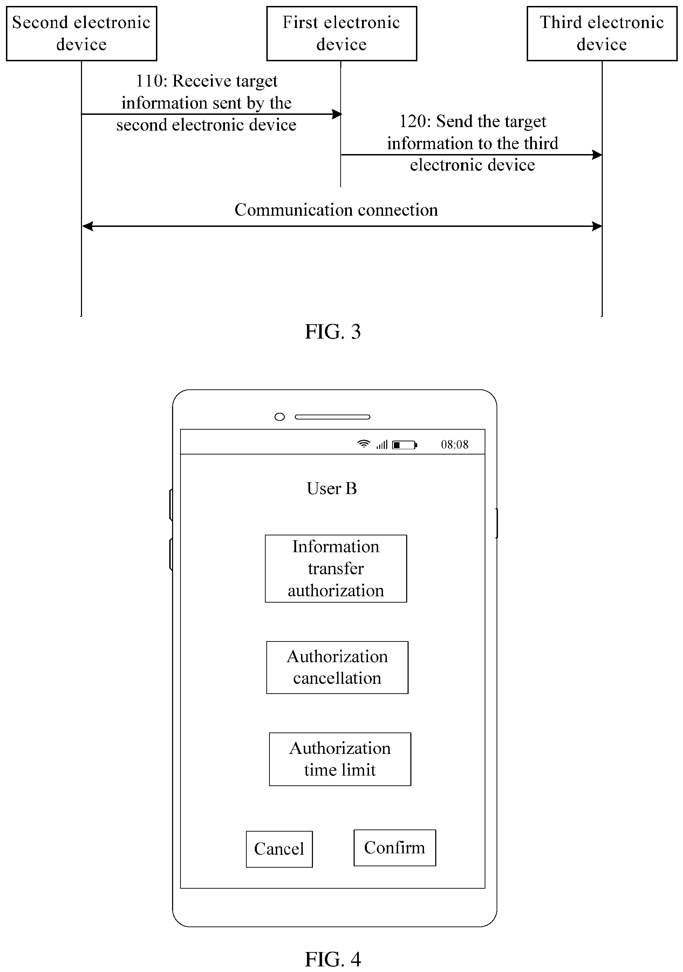

For example, in a case that the user C forgets to bring a door card and needs to open a door with the help of the user A, as shown in FIG. 3, the user C sends target information to the user A through a mobile phone: "Help open the door".

After receiving the target information sent by the user C, a mobile phone of the user A sends the target information to a mobile phone of the user B. The user B can see the door-opening help request information sent by the user C.

The user B sends reply information to the user C: "OK, the door is open".

The mobile phone of the user C receives the reply information and directly sends reply information to the mobile phone of the user B: "Thank you".

According to the information sending method provided in this embodiment of this application, the target information sent by the second electronic device to the first electronic device is sent to the third electronic device corresponding to the second electronic device, and the communication connection between the second electronic device and the third electronic device is established. In this way, in a case that it is inconvenient for the user A to communicate with the user C, the user A does not need to manually forward the target information, and then the user B can receive the target information, so that the user B can reply to the target information of the user C in a timely manner. In addition, the user A does not need to manually remind the user C to contact the user B, and then a communication relationship between the user C and the user B may be automatically established in a timely manner. This helps to avoid inconvenience caused to daily work and life due to a fact that the information is not processed in a timely manner. The operation is simple and fast, and user experience is significantly improved.

It may be understood that, to send the target information to the third electronic device, a correspondence between the second electronic device and the third electronic device needs to be established in advance. In a plurality of embodiments below, a mode of establishing the correspondence is described in detail from a plurality of aspects.

According to some embodiments of this application, before step 110, the method further includes:
receiving a first input of a user;
sending an authorization request to the third electronic device in response to the first input, where the authorization request is used to determine the third electronic device as a device in a communication connection with the second electronic device;
receiving a confirmation authorization response returned by the third electronic device; and
determining that the third electronic device is a device in a communication connection with the second electronic device, in response to the confirmation authorization response.

In this embodiment, the first input is used to determine the third electronic device.

The first input may be represented in at least one of the following manners.
1. The first input may be represented as a touch input, including but not limited to a tap input, a slide input, a press input, and the like.

In this implementation, receiving the first input of the user may be represented as receiving a touch operation of the user in a display area of a terminal display screen.

To reduce a user misoperation rate, a function area of the first input may be limited to a specific area, for example, a middle area of a display interface. Alternatively, in a state of displaying a target display interface, a target control is displayed on a current interface, and the target control is touched, to implement the first input. Alternatively, the first input is set to a continuous multi-tapping operation in the display area in a target time interval.

2. The first input may be represented as a physical button input.

In this implementation, a body of the terminal is provided with a corresponding physical button such as a mouse or a keyboard. Receiving the first input of the user may be represented as receiving the first input of the user pressing the corresponding physical button, and the first input may also be a combined operation of pressing a plurality of physical buttons at the same time.

3. The first input may be represented as a voice input.

In this implementation, when the terminal receives voice information, semantic recognition may be performed on the voice information, to generate a corresponding control instruction.

Certainly, in another embodiment, the first input may also be represented in another form, including but not limited to a motion-sensing gesture input or the like, which can be specifically determined according to actual needs, and is not limited in this embodiment of this application.

The authorization request is request information used to determine whether the third electronic device agrees to receive target information sent by another electronic device to the first electronic device.

The confirmation authorization response is response information used to reply to the first electronic device and used by the third electronic device to agree to receive the target information.

In an actual execution process, the user A may open a target communication application on the mobile phone, and perform a correspondence establishment operation on a target display interface.

For example, the user A and the user B together follow up a project. In a case that the user A is about to take one day off on February 1, 2021, in order not to delay the project progress, the user A intends to hand over the work on February 1 to the user B.

Then, the user A selects a target display interface corresponding to the user B. As shown in FIG. 4, the target display interface includes a first target control configured to perform information transfer authorization, for example, an "Information transfer authorization" control, and the user A taps the "Information transfer authorization" control to implement the first input.

In response to the first input, the mobile phone of the user A generates an authorization request used to determine whether to agree to the authorization, and sends the authorization request to the mobile phone of the user B.

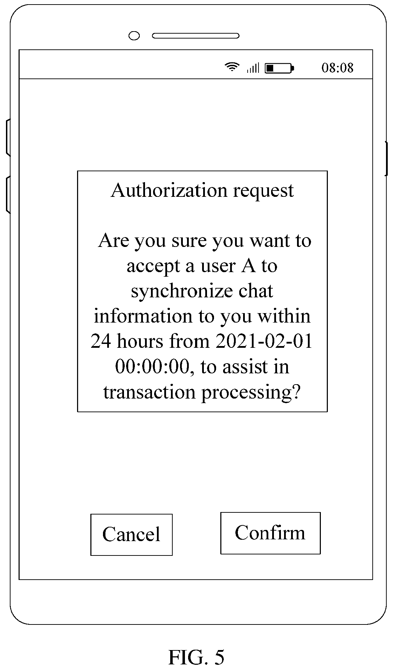

After receiving the authorization request, the mobile phone of the user B displays an authorization interface shown in FIG. 5 in response to the authorization request. The authorization interface includes a selection control configured to determine whether to agree to the authorization, such as a "Cancel" control and a "Confirm" control, and user information that initiates the authorization request.

In a case that the user B agrees to the authorization, the user B taps the "Confirm" control on the authorization interface for confirmation.

The mobile phone of the user B generates a confirmation authorization response that represents agreeing to the authorization, in response to the confirmation operation of the user B, and sends the confirmation authorization response to the mobile phone of the user A.

After receiving the confirmation authorization response, the mobile phone of the user A determines that the user B agrees to receive target information sent by another user to the user A, and then binds the mobile phone of the user B to a second electronic device, to establish a correspondence between a third electronic device and the electronic device of the user B.

It should be noted that the third electronic device is an electronic device bound to a communication account of the user B.

The third electronic device may be one electronic device, or may be a plurality of electronic devices that have a binding relationship with the communication account of the user B, such as a mobile phone, a tablet computer, and a computer of the user B.

After the correspondence is confirmed, when the user C sends target information to the user A on February 1, 2021, the mobile phone of the user A automatically forwards the target information to the mobile phone of the user B. In a case that the user B needs to reply to the target information, the user B may directly send a reply message to the user C, to implement direct communication between the user B and the user C.

According to the information sending method provided in this embodiment of this application, the correspondence between the second electronic device and the third electronic device is established, so that the target information sent by the second electronic device is specifically forwarded to the corresponding third electronic device. This helps to avoid inconvenience caused to daily work and life due to a fact that the information is not processed in a timely manner. In addition, information sending efficiency and flexibility are high.

In some embodiments, the first input is used to determine the third electronic device and a target time period for authorization.

The confirmation authorization response is used to determine the third electronic device as a device that is in the target time period and that is in a communication connection with the second electronic device.

In this embodiment, the target time period may be customized by a user, for example, set to 3 hours, one day, or one week.

In the target time period, the target information sent by the second electronic device to the first electronic device is all forwarded to the third electronic device corresponding to the second electronic device.

Still refer to FIG. 4. The target display interface includes a first target control configured to perform transfer authorization, and a second target control for a user to set a target time period, such as an "Authorization time limit" control.

The user A may tap the "Authorization time limit" control and enter a target time period for authorization to implement the first input.

For example, the user A sets the target time period to 2021-02-01 00:00:00 - 2021-02-01 23:59:59. In a case that the user B agrees to the authorization, the mobile phone of the user B may receive information sent by the third electronic device to the user A within 24 hours from 2021-02-01 00:00:00.

In another time period outside the target time period, information sent to the terminal of the user A is not sent to the terminal of the user B.

According to the information sending method provided in this embodiment of this application, the target time period for authorization is set. This helps to implement information transfer and sending within a limited time period based on an actual situation of the user. The operation is simple and fast, flexibility is high, and universality is relatively high.

The following separately describes implementations of this application from two aspects.

1. The corresponding third electronic device is determined based on a user identity.

In some embodiments, there are a plurality of second electronic devices, the first input includes a second input, a third input, and a fourth input, and the receiving a first input of a user includes:
receiving the second input of the user;
determining a target type identifier corresponding to an identifier of a target second electronic device, in response to the second input;
receiving the third input of the user;
determining an identifier of a target third electronic device corresponding to the target type identifier, in response to the third input; and
receiving the fourth input of the user, where the fourth input is used to send the authorization request to the target third electronic device.

In this embodiment, it may be understood that electronic devices used by different users are also different. Each electronic device corresponds to a user identifier. The third electronic device corresponding to the second electronic device is determined based on the second electronic device. That is, the third electronic device corresponding to the second electronic device is determined based on a user identity corresponding to the second electronic device.

The second input is used to classify an identifier of a second electronic device, and determine a target type identifier corresponding to an identifier of a target second electronic device.

The third input is used to establish a correspondence between a type identifier and an identifier of the third electronic device, and determine an identifier of a target third electronic device corresponding to the target type identifier.

The fourth input is used to send, to the target third electronic device corresponding to the target second electronic device, the target information generated by the target second electronic device and sent to the first electronic device.

The second input, the third input, and the fourth input may be represented as a touch input, a physical button input, a voice input, a motion-sensing gesture input, and the like that are the same as the first input. Details are not described herein again.

The identifier of the second electronic device is used to represent an identity of a user that uses the second electronic device.

An identifier of an electronic device may be set to a name of a user, a work number of the user, or the like. For example, an identifier of an electronic device used by a user C is set to a name "user C" of the user C, and an identifier of an electronic device used by a user D is set to a name "user D" of the user D.

The type identifier may be determined based on an attribute of a user.

For example, the type identifier may be used to represent a project group to which a user belongs, may be used to represent a task type of a project followed by the user, or the like. The type identifier may be set to a project name or a task name in a project.

It may be understood that, in an actual execution process, a quantity of second electronic devices and third electronic devices may be multiple. In a case that the quantity is multiple, a correspondence between a target second electronic device and a target third electronic device needs to be established, to avoid impact on work due to a fact that the target information is forwarded to an irrelevant user terminal.

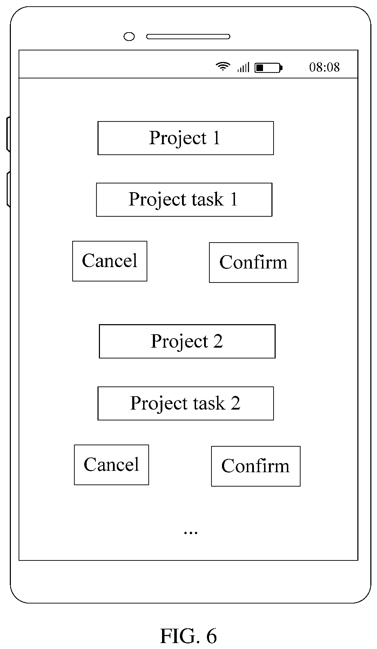

In the work, different users belong to different projects, and different users may be classified based on a project task. As shown in FIG. 6, users who belong to a same project task are classified into one group to implement second input, and then a correspondence between the second electronic device used by the user and the type identifier may be established.

For example, a user 1 and a user 2 are set to be in a project task 1 group, a user 3 is set to be in a project task 2 group, and a user 4 is set to be in a project task 3 group. Then, a correspondence between a second electronic device 1 as well as a second electronic device 2 and the project task 1, a correspondence between a second electronic device 3 and the project task 2, and a correspondence between a second electronic device 4 and the project task 3 are established.

After the correspondence between the second electronic device and the type identifier is established, a correspondence between the type identifier and the third electronic device may be further established.

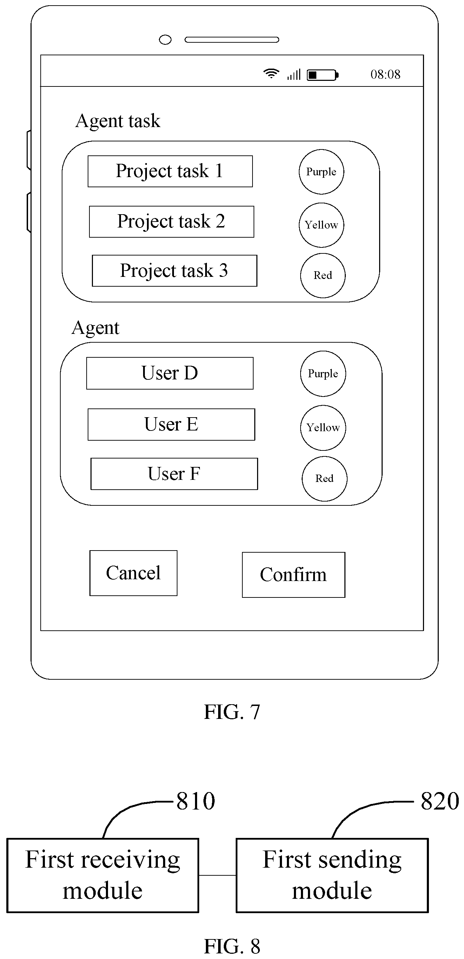

As shown in FIG. 7, agents responsible for a same project task are classified into one group to implement the third input. Then, a correspondence between a third electronic device used by an agent and a type identifier may be established.

For example, on a display interface shown in FIG. 7, a user D is determined as an agent of a project task 1, a user E is determined as an agent of a project task 2, and a user F is determined as an agent of a project task 3. Then, a correspondence between a third electronic device D and the project task 1, a correspondence between a third electronic device E and the project task 2, and a correspondence between a third electronic device F and the project task 3 are established.

In some embodiments, different type identifiers may further be set to different colors to distinguish between different types. As shown in FIG. 7, a control corresponding to the project task 1 is set to purple, a control corresponding to the project task 2 is set to yellow, and a control corresponding to the project task 3 is set to red.

The user clicks a "Confirm" control to establish a correspondence between the second electronic device and the third electronic device.

After the correspondence between the second electronic device and the third electronic device is established, the user A only needs to set a target time period for authorization and select an identifier of a target second electronic device that needs to perform information forwarding, and then an authorization request may be sent to a target third electronic device corresponding to the target second electronic device.

After a user corresponding to the target third electronic device agrees to the authorization, target information sent by any target second electronic device to the terminal of the user A in the target time period is all automatically forwarded to the corresponding third electronic device.

In a case that the terminal of the user A receives target information 1 and target information 2 that are respectively sent by the user 1 and the user 2, the target information 1 and the target information 2 are automatically forwarded to a terminal of the user D. In this case, the user D may directly exchange information with the user 1 and the user 2.

Alternatively, when the terminal of the user A receives target information 4 sent by the user 4, the target information 4 is automatically forwarded to a terminal of the user F. In this case, the user F may directly exchange information with the user 4.

According to the information sending method provided in this embodiment of this application, the electronic devices are classified, and the correspondence between the target second electronic device and the target third electronic device is established based on the task type. In a case that there are a plurality of second electronic devices, target information sent by a target second electronic device to the first electronic device may be sent to a third electronic device related to a project task. This avoids impact on work due to a fact that the target information is sent to an unrelated user, and significantly improves efficiency of an intermediate process. In addition, and sending information efficiently and flexibly are high.

The third electronic device is determined based on content of the target information.

In some embodiments, step 120 includes:
performing semantic recognition on the target information, and determining, based on a semantic recognition result, a target third electronic device corresponding to the target information; and
sending the target information to the target third electronic device.

In this embodiment, after the first electronic device receives the target information, the third electronic device is not determined based on the second electronic device that sends the target information. Instead, the third electronic device is determined based on the content of the target information.

It may be understood that the target information includes a keyword of project task information, and the keyword information is recognized through semantic recognition, to classify target information, and establish a correspondence between target information corresponding to a target type identifier and an identifier of a third electronic device corresponding to the target type identifier.

For example, when the terminal of the user A recognizes that target information 1 includes a keyword such as "project task 1", the target information 1 is forwarded to a terminal of a user D. In this case, the user D may directly exchange information with a user that generates the target information 1.

According to the information sending method provided in this embodiment of this application, semantic recognition is performed on the target information, and the correspondence between the target information and the target third electronic device is established based on the semantic recognition result. In a case that a correspondence between some second electronic devices and the third electronic device is not set, this helps to avoid impact on daily work and life due to a fact that the target information sent by the second electronic device is not forwarded in a timely manner. In addition, a coverage range is wide and information sending efficiency is high.

In some embodiments, step 120 further includes: sending the target information to a plurality of third electronic devices based on a target sequence.

In this embodiment, the target sequence may be based on user customization or system default.

For example, the target sequence may be set to a sequence of creating a project task.

For example, when a user 1 belongs to both a project 1 and a project 3, after receiving target information, the user 1 may send the target information to an agent of a corresponding project based on a sequence of creating a task. In a case that creation time of the project 1 is earlier than that of the project 3, the target information is first sent to a terminal of an agent 1 corresponding to the project 1, and then the target information is sent to a terminal of an agent 3 corresponding to the project 3.

It should be noted that, the information sending method provided in this embodiment of this application may be performed by an information sending apparatus, or by a control module that is in the information sending apparatus and that is configured to perform the information sending method. In this embodiment of this application, that the information sending apparatus performs the information sending method is used as an example to describe the information sending apparatus provided in an embodiment of this application.

An embodiment of this application further provides an information sending apparatus.

As shown in FIG. 8, a first electronic device includes a first receiving module 810 and a first sending module 820.

The first receiving module 810 is configured to receive target information sent by a second electronic device.

The first sending module 820 is configured to send the target information to a third electronic device, so that a communication connection based on the target information is established between the third electronic device and the second electronic device.

According to the first electronic device provided in this embodiment of this application, the target information sent by the second electronic device to the first electronic device is sent to the third electronic device corresponding to the second electronic device, and the communication connection between the second electronic device and the third electronic device is established. In this way, in a case that it is inconvenient for a user A to communicate with a user C, the user A does not need to manually forward target information, and a communication connection between the user C and a user B may be established in a timely manner, to reply to information of the user C in a timely manner. This avoids inconvenience caused to daily work and life due to a fact that the information is not processed in a timely manner. The operation is simple and fast, and user experience is significantly improved. The embodiment does not form part of the present invention but is an example useful for understanding the invention.

In some embodiments, the apparatus further includes:
a second receiving module, configured to receive a first input of a user before receiving the target information sent by the second electronic device;
a second sending module, configured to send an authorization request to the third electronic device in response to the first input, where the authorization request is used to determine the third electronic device as a device in a communication connection with the second electronic device;
a third receiving module, configured to receive a confirmation authorization response returned by the third electronic device; and
a first determining module, configured to determine that the third electronic device is a device in a communication connection with the second electronic device, in response to the confirmation authorization response.

The embodiment does not form part of the present invention but is an example useful for understanding the invention.

In some embodiments, there are a plurality of second electronic devices, the first input includes a second input, a third input, and a fourth input, and the apparatus further includes a second determining module.

The second receiving module is further configured to receive the second input of the user.

The second determining module is configured to determine a target type identifier corresponding to an identifier of a target second electronic device, in response to the second input.

The second receiving module is further configured to receive the third input of the user.

The second determining module is further configured to determine an identifier of a target third electronic device corresponding to the target type identifier, in response to the third input.

The second receiving module is further configured to receive the fourth input of the user, where the fourth input is used to send the authorization request to the target third electronic device.

In some embodiments, the apparatus further includes a third determining module.

The third determining module is configured to perform semantic recognition on the target information, and determine, based on a semantic recognition result, a target third electronic device corresponding to the target information.

The first sending module 820 is further configured to send the target information to the target third electronic device.

An embodiment of this application further provides another information sending method.

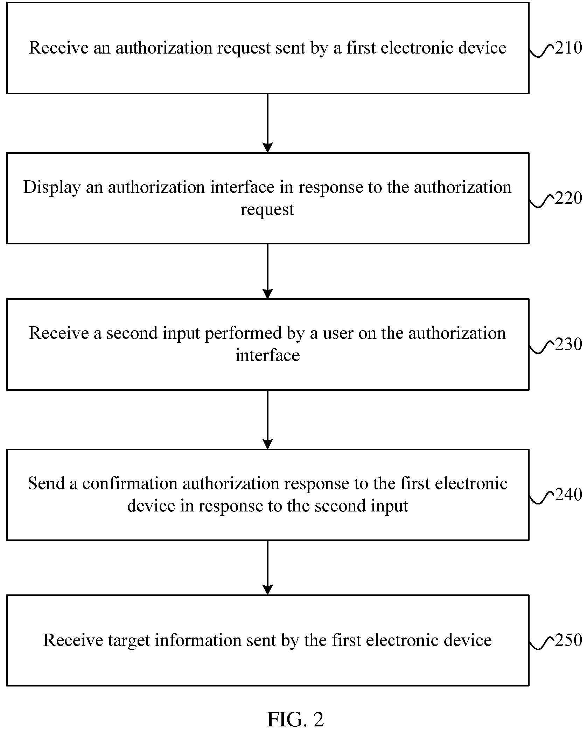

As shown in FIG. 2, the information sending method is applied to a third electronic device, and includes steps 210, 220, 230, 240, and 250.

Step 210: Receive an authorization request sent by a first electronic device, where the authorization request is used to determine a second electronic device as a device in a communication connection with the third electronic device.

In this step, the authorization request is generated by the first electronic device and is used to determine whether the third electronic device agrees to receive target information sent by another electronic device to the first electronic device.

The authorization request includes an identifier of the first electronic device that requests the authorization.

In some embodiments, the authorization request may further include a target time period for authorization.

The target time period may be customized by a user corresponding to the first electronic device, for example, set to 3 hours, one day, or one week.

In the target time period, the target information sent by the second electronic device to the first electronic device is all forwarded to the third electronic device corresponding to the second electronic device.

Step 220: Display an authorization interface in response to the authorization request.

After receiving the authorization request, the second electronic device displays an authorization interface shown in FIG. 5 in response to the authorization request. The authorization interface includes the identifier of the first electronic device that requests the authorization, such as an identifier "user A" of the first electronic device.

In some embodiments, the authorization interface further includes a target time period for authorization.

It may be understood that content on the authorization interface corresponds to content of the authorization request sent by the first electronic device. In a case that a user A sets a target time period for authorization, the target time period for authorization is correspondingly displayed on an authorization interface of a user B.

For example, after the user A sets a configuration that target information that is received at any moment within 2021-02-01 00:00:00 - 2021-02-01 23:59:59 and that is sent by a second electronic device is forwarded to a terminal of a user B, a terminal of the user A generates an authorization request, and sends the authorization request to the terminal of the user B.

The terminal of the user B receives and responds to the authorization request, and displays an authorization interface shown in FIG. 5. The authorization interface includes an identifier of a first electronic device that requests the authorization and a target time period for authorization, for example, "Are you sure you want to accept a user A to synchronize chat information to you within 24 hours from 2021-02-01 00:00:00, to assist in transaction processing?"

On the authorization interface, the user B may choose to agree to or reject the authorization.

In this embodiment, the target time period for authorization is displayed. This helps to clarify an authorization time limit to the user B, to determine whether it is convenient to assist in receiving the target information in the target time period. In addition, this helps to clarify an authorization condition, and improves user experience.

Step 230: Receive a fifth input performed by a user on the authorization interface.

In this step, the fifth input is used to confirm the authorization request.

The fifth input may be represented as a touch input, a physical button input, a voice input, a motion-sensing gesture input, and the like that are the same as the first input. Details are not described herein again.

In an actual execution process, the user B may tap a "Confirm" control shown in FIG. 5, to implement the fifth input to agree to the authorization.

Certainly, in other embodiments, the user B may also choose to reject the authorization request, for example, tap a "Cancel" control. The second electronic device generates an authorization cancellation response, and returns the authorization cancellation response to the terminal of the user A. The terminal of the user A receives the authorization cancellation response and ends the authorization request.

Step 240: Send a confirmation authorization response to the first electronic device in response to the fifth input.

In this step, the confirmation authorization response is response information used to reply to the first electronic device and used by the third electronic device to agree to receive the target information.

In a case that the user B agrees to the authorization, the terminal of the user B generates the confirmation authorization response in response to the fifth input, and replies to the confirmation authorization response to the terminal of the user A.

The terminal of the user A receives and responds to the confirmation authorization response, and establishes a correspondence between the terminal of the user B and the second electronic device.

Step 250: Receive the target information sent by the first electronic device, where the target information is sent by the second electronic device to the first electronic device.

In this step, after the user B agrees to the authorization, and after the terminal of the user A receives the target information sent by the second electronic device, for example, after receiving target information sent by a terminal of a user C, the target information is automatically forwarded to the terminal of the user B. The user B may see the target information sent by the user C, and reply to a message to the terminal of the user C, to implement direct information exchange with the user C.

According to the information sending method provided in this embodiment of this application, the target information sent by the second electronic device to the first electronic device is received, and a communication connection with the second electronic device is established. In this way, in a case that it is inconvenient for the user A to communicate with the user C, the user A does not need to manually forward the target information, and a communication connection between the user C and the user B may be established in a timely manner, to reply to the information of the user C in a timely manner. This avoids impact on daily work and life due to a fact that the information is not processed in a timely manner, and significantly improves user experience.

It should be noted that, the information sending method provided in this embodiment of this application may be performed by an information sending apparatus, or by a control module that is in the information sending apparatus and that is configured to perform the information sending method. In this embodiment of this application, that the information sending apparatus performs the information sending method is used as an example to describe the information sending apparatus provided in an embodiment of this application.

An embodiment of this application further provides a third electronic device.

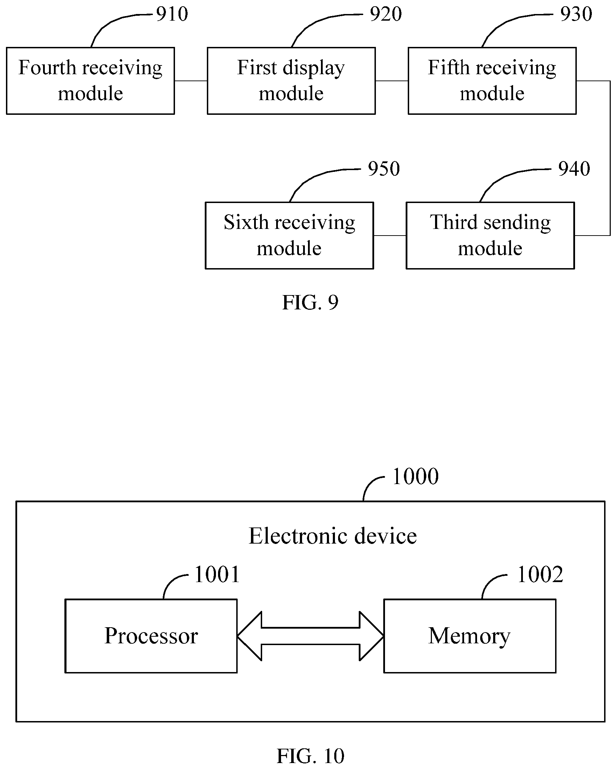

As shown in FIG. 9, the third electronic device includes a fourth receiving module 910, a first display module 920, a fifth receiving module 930, a third sending module 940, and a sixth receiving module 950.

The fourth receiving module 910 is configured to receive an authorization request sent by a first electronic device, where the authorization request is used to determine a second electronic device as a device in a communication connection with the third electronic device.

The first display module 920 is configured to display an authorization interface in response to the authorization request.

The fifth receiving module 930 is configured to receive a fifth input performed by a user on the authorization interface.

The third sending module 940 is configured to send a confirmation authorization response to the first electronic device in response to the fifth input.

The sixth receiving module 950 is configured to receive target information sent by the first electronic device, where the target information is sent by the second electronic device to the first electronic device.

According to the third electronic device provided in this embodiment of this application, the target information sent by the second electronic device to the first electronic device is received, and a communication connection with the second electronic device is established. In this way, in a case that it is inconvenient for a user A to communicate with a user C, the user A does not need to manually forward the target information, and a communication connection between the user C and a user B may be established in a timely manner, to reply to information of the user C in a timely manner. This avoids impact on daily work and life due to a fact that the information is not processed in a timely manner, and significantly improves user experience.

The electronic device in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in this embodiment of this application.

The information sending apparatus in this embodiment of this application may be an apparatus with an operating system. The operating system may be an Android (Android) operating system, an iOS operating system, or another possible operating system. This is not specifically limited in this embodiment of this application.

The information sending apparatus provided in this embodiment of this application can implement the processes in the method embodiments of FIG. 1 to FIG. 7. To avoid repetition, details are not described herein again.

Optionally, as shown in FIG. 10, an embodiment of this application further provides an electronic device 1000, including a processor 1001, a memory 1002, and a program or an instruction that is stored in the memory 1002 and that can be run on the processor 1001. When the program or the instruction is executed by the processor 1001, the processes in the foregoing information sending method embodiments are implemented, and a same technical effect can be achieved. To avoid repetition, details are not described herein again.

The memory 1002 may be configured to store a software program and various data. The memory 1002 may mainly include a first storage area for storing a program or an instruction and a second storage area for storing data. The first storage area may store an operating system, and an application or an instruction required by at least one function (for example, a sound playing function or an image playing function). In addition, the memory 1002 may be a volatile memory or a nonvolatile memory, or the memory 1002 may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1002 in this embodiment of this application includes but is not limited to these memories and any memory of another proper type.

The processor 1001 may include one or more processing units. Optionally, an application processor and a modem processor are integrated into the processor 1001. The application processor mainly processes an operating system, a user interface, an application, or the like. The modem processor mainly processes a wireless communication signal, for example, a baseband processor. It may be understood that, alternatively, the modem processor may not be integrated into the processor 1001.

It should be noted that the electronic device in this embodiment of this application includes the foregoing mobile electronic device and the foregoing non-mobile electronic device.

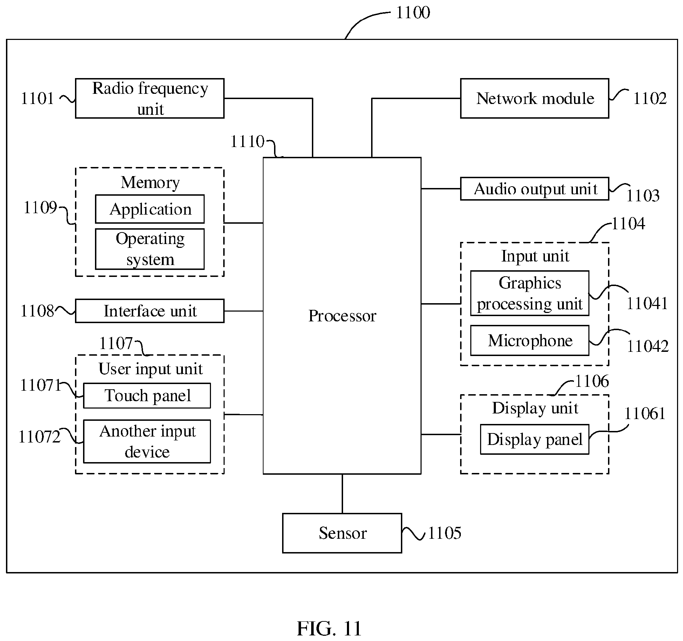

FIG. 11 is a schematic diagram of a hardware structure of an electronic device according to an embodiment of this application.

The electronic device 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the electronic device 1100 may further include a power supply (such as a battery) that supplies power to each component. The power supply may be logically connected to the processor 1110 by using a power supply management system, to implement functions such as charging and discharging management, and power consumption management by using the power supply management system. The structure of the electronic device shown in FIG. 11 does not constitute a limitation on the electronic device. The electronic device may include components more or fewer than those shown in the figure, a combination of some components, or different component arrangements. Details are not described herein.

The input unit 1104 is configured to receive target information sent by a second electronic device.

The network module 1102 is configured to send the target information to a third electronic device so that a communication connection based on the target information is established between the third electronic device and the second electronic device.

According to the electronic device provided in this embodiment of this application, the target information sent by the second electronic device to a first electronic device is sent to the third electronic device corresponding to the second electronic device, and the communication connection between the second electronic device and the third electronic device is established. In this way, in a case that it is inconvenient for a user A to communicate with a user C, the user A does not need to manually forward target information, and a communication connection between the user C and a user B may be established in a timely manner, to reply to information of the user C in a timely manner. This avoids inconvenience caused to daily work and life due to a fact that the information is not processed in a timely manner. The operation is simple and fast, and user experience is significantly improved.

Optionally, the user input unit 1107 is configured to receive a first input of a user before receiving the target information sent by the second electronic device.

The network module 1102 is further configured to send an authorization request to the third electronic device in response to the first input, where the authorization request is used to determine the third electronic device as a device in a communication connection with the second electronic device.

The input unit 1104 is configured to receive a confirmation authorization response returned by the third electronic device.

The processor 1110 is configured to determine that the third electronic device is a device in a communication connection with the second electronic device, in response to the confirmation authorization response.

Optionally, there are a plurality of second electronic devices, the first input includes a second input, a third input, and a fourth input, and the receiving a first input of a user includes:

The user input unit 1107 is further configured to receive the second input of the user;
the processor 1110 is further configured to determine a target type identifier corresponding to an identifier of a target second electronic device, in response to the second input;
the user input unit 1107 is further configured to receive the third input of the user;
the processor 1110 is further configured to determine an identifier of a target third electronic device corresponding to the target type identifier, in response to the third input; and
the user input unit 1107 is further configured to receive the fourth input of the user, where the fourth input is used to send the authorization request to the target third electronic device.

Optionally, the sending the target information to a third electronic device includes: performing semantic recognition on the target information, and determining, based on a semantic recognition result, a target third electronic device corresponding to the target information; and sending the target information to the target third electronic device.

The processor 1110 is further configured to performing semantic recognition on the target information, and determining, based on a semantic recognition result, a target third electronic device corresponding to the target information; and
the network module 1102 is further configured to send the target information to the target third electronic device.

According to the electronic device provided in this embodiment of this application, a correspondence between the second electronic device and the third electronic device is established, so that the target information sent by the second electronic device is specifically forwarded to the corresponding third electronic device. This avoids impact on work due to a fact that the target information is sent to an irrelevant user. In addition, information sending efficiency and flexibility are high.

Alternatively, the input unit 1104 is further configured to receive an authorization request sent by a first electronic device, where the authorization request is used to determine a second electronic device as a device in a communication connection with the third electronic device.

The display unit 1106 is configured to display an authorization interface in response to the authorization request.

The user input unit 1107 is further configured to receive a fifth input performed by the user on the authorization interface.

The network module 1102 is further configured to send a confirmation authorization response to the first electronic device in response to the fifth input.

The input unit 1104 is further configured to receive the target information sent by the first electronic device, where the target information is sent by the second electronic device to the first electronic device.

According to the electronic device provided in this embodiment of this application, the target information sent by the second electronic device to the first electronic device is received, and a communication connection with the second electronic device is established. In this way, in a case that it is inconvenient for a user A to communicate with a user C, the user A does not need to manually forward the target information, and a communication connection between the user C and a user B may be established in a timely manner, to reply to information of the user C in a timely manner. This avoids inconvenience caused to daily work and life due to a fact that the information is not processed in a timely manner, and significantly improves user experience.

It should be understood that, in this embodiment of this application, the input unit 1104 may include a graphics processing unit (Graphics Processing Unit, GPU) 11041 and a microphone 11042, and the graphics processing unit 11041 processes image data of a still picture or a video obtained by an image capture apparatus (such as a camera) in a video capture mode or an image capture mode. The display unit 1106 may include a display panel 11061. The display panel 11061 may be configured in a form such as a liquid crystal display or an organic light-emitting diode. The user input unit 1107 includes a touch panel 11071 and another input device 11072. The touch panel 11071 is also referred to as a touchscreen. The touch panel 11071 may include two parts: a touch detection apparatus and a touch controller. The another input device 11072 may include but be not limited to a physical keyboard, a functional button (such as a volume control button or a power on/off button), a trackball, a mouse, and a joystick. Details are not described herein. The memory 1109 may be configured to store a software program and various data, including but not limited to an application program and an operating system. An application processor and a modem processor may be integrated into the processor 1110. The application processor mainly processes an operating system, a user interface, an application, and the like, and the modem processor mainly processes wireless communication. It may be understood that, alternatively, the modem processor may not be integrated into the processor 1110.

An embodiment of this application further provides a readable storage medium. The readable storage medium stores a program or an instruction, and when the program or the instruction is executed by a processor, the processes of the foregoing information sending method embodiments are implemented and a same technical effect can be achieved. To avoid repetition, details are not described herein again.

The processor is a processor in the electronic device in the foregoing embodiment. The readable storage medium includes a computer-readable storage medium such as a computer read-only memory (Read-Only Memory, ROM), a random access memory (Random Access Memory, RAM), a magnetic disk, an optical disc, or the like.

An embodiment of this application further provides a chip. The chip includes a processor and a communication interface, the communication interface is coupled to the processor, and the processor is configured to run a program or an instruction to implement the processes of the foregoing information sending method embodiments, and a same technical effect can be achieved. To avoid repetition, details are not described herein again.

It should be understood that the chip mentioned in this embodiment of this application may also be referred to as a system-level chip, a system chip, a chip system, an on-chip system chip, or the like.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. An element limited by "includes a ..." does not, without more constraints, preclude the presence of additional identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiments may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive.

## Claims

1. An information sending method, performed by a first electronic device and **characterized by** comprising:
receiving (110) target information sent by a second electronic device, wherein the target information is information generated and sent by the second electronic device; and
sending (120) the target information to a third electronic device, so that a communication connection based on the target information is established between the third electronic device and the second electronic device;
wherein the communication connection is used to implement direct communication between the third electronic device and the second electronic device without going through the first electronic device;
wherein before the receiving target information sent by a second electronic device, the method further comprises:
receiving a first input of a user;
sending an authorization request to the third electronic device in response to the first input, wherein the authorization request is used to determine the third electronic device as a device in a communication connection with the second electronic device;
receiving a confirmation authorization response returned by the third electronic device; and
determining that the third electronic device is a device in a communication connection with the second electronic device, in response to the confirmation authorization response;
wherein the first electronic device is a terminal.

2. The information sending method according to claim 1, wherein there are a plurality of second electronic devices, the first input comprises a second input, a third input, and a fourth input, and the receiving a first input of a user comprises:
receiving the second input of the user;
determining a target type identifier corresponding to an identifier of a target second electronic device, in response to the second input, wherein the target type identifier is a type identifier of the target second electronic device;
receiving the third input of the user;
determining an identifier of a target third electronic device corresponding to the target type identifier, in response to the third input; and
receiving the fourth input of the user, wherein the fourth input is used to send the authorization request to the target third electronic device.

3. The information sending method according to any one of claims 1 to 2, wherein the sending the target information to a third electronic device comprises:
performing semantic recognition on the target information, and determining, based on a semantic recognition result, a target third electronic device corresponding to the target information; and
sending the target information to the target third electronic device.

4. An information sending method, performed by a third electronic device and **characterized by** comprising:
receiving (210) an authorization request sent by a first electronic device, wherein the authorization request is used to determine a second electronic device as a device in a communication connection with the third electronic device;
displaying (220) an authorization interface in response to the authorization request;
receiving (230) a fifth input performed by a user on the authorization interface;
sending (240) a confirmation authorization response to the first electronic device in response to the fifth input; and
receiving (250) target information sent by the first electronic device, wherein the target information is generated by the second electronic device, and the target information is sent by the second electronic device to the first electronic device after the confirmation authorization response is sent;
wherein the communication connection is used to implement direct communication between the third electronic device and the second electronic device without going through the first electronic device;
wherein the first electronic device is a terminal.

5. A first electronic device, **characterized by** comprising:
a first receiving module (810), configured to receive target information sent by a second electronic device, wherein the target information is information generated and sent by the second electronic device; and
a first sending module (820), configured to send the target information to a third electronic device, so that a communication connection based on the target information is established between the third electronic device and the second electronic device; wherein the communication connection is used to implement direct communication between the third electronic device and the second electronic device without going through the first electronic device;.
a second receiving module, configured to receive a first input of a user before receiving the target information sent by the second electronic device;
a second sending module, configured to send an authorization request to the third electronic device in response to the first input, wherein the authorization request is used to determine the third electronic device as a device in a communication connection with the second electronic device;
a third receiving module, configured to receive a confirmation authorization response returned by the third electronic device; and
a first determining module, configured to determine that the third electronic device is a device in a communication connection with the second electronic device, in response to the confirmation authorization response;
wherein the first electronic device is a terminal.

6. The first electronic device according to claim 5, wherein there are a plurality of second electronic devices, the first input comprises a second input, a third input, and a fourth input, and the apparatus further comprises a second determining module, wherein
the second receiving module is further configured to receive the second input of the user;
the second determining module is configured to determine a target type identifier corresponding to an identifier of a target second electronic device, in response to the second input, wherein the target type identifier is a type identifier of the target second electronic device;
the second receiving module is further configured to receive the third input of the user;
the second determining module is further configured to determine an identifier of a target third electronic device corresponding to the target type identifier, in response to the third input; and
the second receiving module is further configured to receive the fourth input of the user, wherein the fourth input is used to send the authorization request to the target third electronic device.

7. The first electronic device according to any one of claims 5 to 6, further comprising a third determining module, wherein
the third determining module is configured to perform semantic recognition on the target information, and determine, based on a semantic recognition result, a target third electronic device corresponding to the target information; and
the first sending module is further configured to send the target information to the target third electronic device.

8. A third electronic device, **characterized by** comprising:
a fourth receiving module (910), configured to receive an authorization request sent by a first electronic device, wherein the authorization request is used to determine a second electronic device as a device in a communication connection with the third electronic device;
a first display module (920), configured to display an authorization interface in response to the authorization request;
a fifth receiving module (930), configured to receive a fifth input performed by a user on the authorization interface;
a third sending module (940), configured to send a confirmation authorization response to the first electronic device in response to the fifth input; and
a sixth receiving module (950), configured to receive target information sent by the first electronic device, wherein the target information is generated by the second electronic device, and the target information is sent by the second electronic device to the first electronic device after the confirmation authorization response is sent;
wherein the communication connection is used to implement direct communication between the third electronic device and the second electronic device without going through the first electronic device;
wherein the first electronic device is a terminal.

9. A readable storage medium, wherein the readable storage medium stores a program or an instruction, and when the program or the instruction is executed by a processor, the information sending method according to any one of claims 1 to 4 is implemented.

10. A computer program product, wherein the program product is stored in a non-transitory storage medium, and the program product is executed by at least one processor to implement the information sending method according to any one of claims 1 to 4.

## Patentansprüche

1. Informationssendeverfahren, das von einer ersten elektronischen Vorrichtung durchgeführt wird und **dadurch gekennzeichnet ist, dass** es umfasst:
Empfangen (110) von Zielinformationen, die von einer zweiten elektronischen Vorrichtung gesendet werden, wobei die Zielinformationen Informationen sind, die von der zweiten elektronischen Vorrichtung erzeugt und gesendet werden; und
Senden (120) der Zielinformationen an eine dritte elektronische Vorrichtung, sodass eine auf den Zielinformationen basierende Kommunikationsverbindung zwischen der dritten elektronischen Vorrichtung und der zweiten elektronischen Vorrichtung hergestellt wird;
wobei die Kommunikationsverbindung dazu verwendet wird, eine direkte Kommunikation zwischen der dritten elektronischen Vorrichtung und der zweiten elektronischen Vorrichtung zu verwirklichen, ohne über die erste elektronische Vorrichtung zu gehen;
wobei das Verfahren vor dem Empfangen von Zielinformationen, die von einer zweiten elektronischen Vorrichtung gesendet werden, ferner umfasst:
Empfangen einer ersten Eingabe eines Benutzers;
Senden einer Autorisierungsanforderung an die dritte elektronische Vorrichtung als Reaktion auf die erste Eingabe, wobei die Autorisierungsanforderung dazu verwendet wird, die dritte elektronische Vorrichtung als eine Vorrichtung in einer Kommunikationsverbindung mit der zweiten elektronischen Vorrichtung zu bestimmen;
Empfangen einer Bestätigungsautorisierungsantwort, die von der dritten elektronischen Vorrichtung zurückgegeben wird; und
Bestimmen, dass die dritte elektronische Vorrichtung eine Vorrichtung in einer Kommunikationsverbindung mit der zweiten elektronischen Vorrichtung ist, als Reaktion auf die Bestätigungsautorisierungsantwort;
wobei die erste elektronische Vorrichtung ein Endgerät ist.

2. Informationssendeverfahren nach Anspruch 1, wobei es mehrere zweite elektronische Vorrichtungen gibt, die erste Eingabe eine zweite Eingabe, eine dritte Eingabe und eine vierte Eingabe umfasst und das Empfangen einer ersten Eingabe eines Benutzers umfasst:
Empfangen der zweiten Eingabe des Benutzers;
Bestimmen einer Zieltypkennung, die einer Kennung einer Ziel-zweiten elektronischen Vorrichtung entspricht, als Reaktion auf die zweite Eingabe, wobei die Zieltypkennung eine Typkennung der Ziel-zweiten elektronischen Vorrichtung ist;
Empfangen der dritten Eingabe des Benutzers;
Bestimmen einer Kennung einer Ziel-dritten elektronischen Vorrichtung, die der Zieltypkennung entspricht, als Reaktion auf die dritte Eingabe; und
Empfangen der vierten Eingabe des Benutzers, wobei die vierte Eingabe dazu verwendet wird, die Autorisierungsanforderung an die Ziel-dritte elektronische Vorrichtung zu senden.

3. Informationssendeverfahren nach einem der Ansprüche 1 bis 2, wobei das Senden der Zielinformationen an eine dritte elektronische Vorrichtung umfasst:
Durchführen einer semantischen Erkennung an den Zielinformationen und Bestimmen, basierend auf einem Ergebnis der semantischen Erkennung, einer den Zielinformationen entsprechenden Ziel-dritten elektronischen Vorrichtung; und
Senden der Zielinformationen an die Ziel-dritte elektronische Vorrichtung.

4. Informationssendeverfahren, das von einer dritten elektronischen Vorrichtung durchgeführt wird und **dadurch gekennzeichnet ist, dass** es umfasst:
Empfangen (210) einer von einer ersten elektronischen Vorrichtung gesendeten Autorisierungsanforderung, wobei die Autorisierungsanforderung dazu verwendet wird, eine zweite elektronische Vorrichtung als eine Vorrichtung in einer Kommunikationsverbindung mit der dritten elektronischen Vorrichtung zu bestimmen;
Anzeigen (220) einer Autorisierungsschnittstelle als Reaktion auf die Autorisierungsanforderung;
Empfangen (230) einer fünften Eingabe, die von einem Benutzer auf der Autorisierungsschnittstelle vorgenommen wird;
Senden (240) einer Bestätigungsautorisierungsantwort an die erste elektronische Vorrichtung als Reaktion auf die fünfte Eingabe; und
Empfangen (250) von Zielinformationen, die von der ersten elektronischen Vorrichtung gesendet werden, wobei die Zielinformationen von der zweiten elektronischen Vorrichtung erzeugt werden und die Zielinformationen von der zweiten elektronischen Vorrichtung an die erste elektronische Vorrichtung gesendet werden, nachdem die Bestätigungsautorisierungsantwort gesendet worden ist;
wobei die Kommunikationsverbindung dazu verwendet wird, eine direkte Kommunikation zwischen der dritten elektronischen Vorrichtung und der zweiten elektronischen Vorrichtung zu verwirklichen, ohne über die erste elektronische Vorrichtung zu gehen;
wobei die erste elektronische Vorrichtung ein Endgerät ist.

5. Erste elektronische Vorrichtung, **dadurch gekennzeichnet, dass** sie umfasst:
ein erstes Empfangsmodul (810), das dazu konfiguriert ist, von einer zweiten elektronischen Vorrichtung gesendete Zielinformationen zu empfangen, wobei die Zielinformationen Informationen sind, die von der zweiten elektronischen Vorrichtung erzeugt und gesendet werden; und
ein erstes Sendemodul (820), das dazu konfiguriert ist, die Zielinformationen an eine dritte elektronische Vorrichtung zu senden, sodass eine auf den Zielinformationen basierende Kommunikationsverbindung zwischen der dritten elektronischen Vorrichtung und der zweiten elektronischen Vorrichtung hergestellt wird; wobei die Kommunikationsverbindung dazu verwendet wird, eine direkte Kommunikation zwischen der dritten elektronischen Vorrichtung und der zweiten elektronischen Vorrichtung zu verwirklichen, ohne über die erste elektronische Vorrichtung zu gehen;.
ein zweites Empfangsmodul, das dazu konfiguriert ist, eine erste Eingabe eines Benutzers zu empfangen, bevor die von der zweiten elektronischen Vorrichtung gesendeten Zielinformationen empfangen werden;
ein zweites Sendemodul, das dazu konfiguriert ist, als Reaktion auf die erste Eingabe eine Berechtigungsanfrage an die dritte elektronische Vorrichtung zu senden, wobei die Berechtigungsanfrage dazu verwendet wird, die dritte elektronische Vorrichtung als eine Vorrichtung in einer Kommunikationsverbindung mit der zweiten elektronischen Vorrichtung zu bestimmen;
ein drittes Empfangsmodul, das dazu konfiguriert ist, eine von der dritten elektronischen Vorrichtung zurückgesendete Bestätigungsberechtigungsantwort zu empfangen; und
ein erstes Bestimmungsmodul, das dazu konfiguriert ist, als Reaktion auf die Bestätigungsberechtigungsantwort zu bestimmen, dass die dritte elektronische Vorrichtung eine Vorrichtung in einer Kommunikationsverbindung mit der zweiten elektronischen Vorrichtung ist;
wobei die erste elektronische Vorrichtung ein Endgerät ist.

6. Erste elektronische Vorrichtung nach Anspruch 5, wobei es eine Vielzahl von zweiten elektronischen Vorrichtungen gibt, die erste Eingabe eine zweite Eingabe, eine dritte Eingabe und eine vierte Eingabe umfasst und die Vorrichtung ferner ein zweites Bestimmungsmodul umfasst, wobei
das zweite Empfangsmodul ferner dazu konfiguriert ist, die zweite Eingabe des Benutzers zu empfangen;
das zweite Bestimmungsmodul dazu konfiguriert ist, als Reaktion auf die zweite Eingabe eine Zieltypkennung zu bestimmen, die einer Kennung einer Ziel-zweiten elektronischen Vorrichtung entspricht, wobei die Zieltypkennung eine Typkennung der Ziel-zweiten elektronischen Vorrichtung ist;
das zweite Empfangsmodul ferner dazu konfiguriert ist, die dritte Eingabe des Benutzers zu empfangen;
das zweite Bestimmungsmodul ferner dazu konfiguriert ist, als Reaktion auf die dritte Eingabe eine Kennung einer Ziel-dritten elektronischen Vorrichtung zu bestimmen, die der Zieltypkennung entspricht; und
das zweite Empfangsmodul ferner dazu konfiguriert ist, die vierte Eingabe des Benutzers zu empfangen, wobei die vierte Eingabe dazu verwendet wird, die Berechtigungsanfrage an die Ziel-dritte elektronische Vorrichtung zu senden.

7. Erste elektronische Vorrichtung nach einem der Ansprüche 5 bis 6, ferner umfassend ein drittes Bestimmungsmodul, wobei
das dritte Bestimmungsmodul dazu konfiguriert ist, eine semantische Erkennung an den Zielinformationen durchzuführen und auf der Grundlage eines semantischen Erkennungsergebnisses eine den Zielinformationen entsprechende Ziel-dritte elektronische Vorrichtung zu bestimmen; und
das erste Sendemodul ferner dazu konfiguriert ist, die Zielinformationen an die Ziel-dritte elektronische Vorrichtung zu senden.

8. Dritte elektronische Vorrichtung, **gekennzeichnet dadurch, dass** es folgendes umfasst:
ein viertes Empfangsmodul (910), das dazu konfiguriert ist, eine von einer ersten elektronischen Vorrichtung gesendete Berechtigungsanfrage zu empfangen, wobei die Berechtigungsanfrage dazu verwendet wird, eine zweite
elektronische Vorrichtung als eine Vorrichtung in einer Kommunikationsverbindung mit der dritten elektronischen Vorrichtung zu bestimmen;
ein erstes Anzeigemodul (920), das dazu konfiguriert ist, als Reaktion auf die Berechtigungsanfrage eine Berechtigungsschnittstelle anzuzeigen;
ein fünftes Empfangsmodul (930), das dazu konfiguriert ist, eine fünfte Eingabe zu empfangen, die von einem Benutzer auf der Berechtigungsschnittstelle durchgeführt wird;
ein drittes Sendemodul (940), das dazu konfiguriert ist, als Reaktion auf die fünfte Eingabe eine Bestätigungsberechtigungsantwort an die erste elektronische Vorrichtung zu senden; und
ein sechstes Empfangsmodul (950), das dazu konfiguriert ist, von der ersten elektronischen Vorrichtung gesendete Zielinformationen zu empfangen, wobei die Zielinformationen von der zweiten elektronischen Vorrichtung erzeugt werden und die Zielinformationen von der zweiten elektronischen Vorrichtung an die erste elektronische Vorrichtung gesendet werden, nachdem die Bestätigungsberechtigungsantwort gesendet wurde;
wobei die Kommunikationsverbindung dazu verwendet wird, eine direkte Kommunikation zwischen der dritten elektronischen Vorrichtung und der zweiten elektronischen Vorrichtung zu implementieren, ohne über die erste elektronische Vorrichtung zu gehen;
wobei die erste elektronische Vorrichtung ein Endgerät ist.

9. Lesbares Speichermedium, wobei das lesbare Speichermedium ein Programm oder eine Anweisung speichert und, wenn das Programm oder die Anweisung durch einen Prozessor ausgeführt wird, das Informationssendeverfahren nach einem der Ansprüche 1 bis 4 implementiert wird.

10. Computerprogrammprodukt, wobei das Programmprodukt in einem nichtflüchtigen Speichermedium gespeichert ist und das Programmprodukt durch mindestens einen Prozessor ausgeführt wird, um das Informationssendeverfahren nach einem der Ansprüche 1 bis 4 zu implementieren.

## Revendications

1. Procédé d'envoi d'informations, mis en œuvre par un premier dispositif électronique et **caractérisé en ce qu'**il comprend :
la réception (110) d'informations cibles envoyées par un deuxième dispositif électronique, les informations cibles étant des informations générées et envoyées par le deuxième dispositif électronique ; et
l'envoi (120) des informations cibles à un troisième dispositif électronique, de sorte qu'une connexion de communication basée sur les informations cibles est établie entre le troisième dispositif électronique et le deuxième dispositif électronique ;
la connexion de communication étant utilisée pour mettre en œuvre une communication directe entre le troisième dispositif électronique et le deuxième dispositif électronique sans passer par le premier dispositif électronique ;
dans lequel, avant la réception d'informations cibles envoyées par un deuxième dispositif électronique, le procédé comprend en outre :
la réception d'une première entrée d'un utilisateur ;
l'envoi d'une demande d'autorisation au troisième dispositif électronique en réponse à la première entrée, la demande d'autorisation étant utilisée pour déterminer le troisième dispositif électronique comme étant un dispositif dans une connexion de communication avec le deuxième dispositif électronique ;
la réception d'une réponse de confirmation d'autorisation renvoyée par le troisième dispositif électronique ; et
la détermination du fait que le troisième dispositif électronique est un dispositif dans une connexion de communication avec le deuxième dispositif électronique, en réponse à la réponse de confirmation d'autorisation ;
le premier dispositif électronique étant un terminal.

2. Procédé d'envoi d'informations selon la revendication 1, dans lequel il existe une pluralité de deuxièmes dispositifs électroniques, la première entrée comprend une deuxième entrée, une troisième entrée et une quatrième entrée, et la réception d'une première entrée d'un utilisateur comprend :
la réception de la deuxième entrée de l'utilisateur ;
la détermination d'un identifiant de type cible correspondant à un identifiant d'un deuxième dispositif électronique cible, en réponse à la deuxième entrée, l'identifiant de type cible étant un identifiant de type du deuxième dispositif électronique cible ;
la réception de la troisième entrée de l'utilisateur ;
la détermination d'un identifiant d'un troisième dispositif électronique cible correspondant à l'identifiant de type cible, en réponse à la troisième entrée ; et
la réception de la quatrième entrée de l'utilisateur, la quatrième entrée étant utilisée pour envoyer la demande d'autorisation au troisième dispositif électronique cible.

3. Procédé d'envoi d'informations selon l'une quelconque des revendications 1 à 2, dans lequel l'envoi des informations cibles à un troisième dispositif électronique comprend :
l'exécution d'une reconnaissance sémantique sur les informations cibles, et la détermination, sur la base d'un résultat de reconnaissance sémantique, d'un troisième dispositif électronique cible correspondant aux informations cibles ; et
l'envoi des informations cibles au troisième dispositif électronique cible.

4. Procédé d'envoi d'informations, mis en œuvre par un troisième dispositif électronique et **caractérisé en ce qu'**il comprend :
la réception (210) d'une demande d'autorisation envoyée par un premier dispositif électronique, la demande d'autorisation étant utilisée pour déterminer un deuxième dispositif électronique comme étant un dispositif dans une connexion de communication avec le troisième dispositif électronique ;
l'affichage (220) d'une interface d'autorisation en réponse à la demande d'autorisation ;
la réception (230) d'une cinquième entrée effectuée par un utilisateur sur l'interface d'autorisation ;
l'envoi (240) d'une réponse de confirmation d'autorisation au premier dispositif électronique en réponse à la cinquième entrée ; et
la réception (250) d'informations cibles envoyées par le premier dispositif électronique, les informations cibles étant générées par le deuxième dispositif électronique, et les informations cibles étant envoyées par le deuxième dispositif électronique au premier dispositif électronique après l'envoi de la réponse de confirmation d'autorisation ;
la connexion de communication étant utilisée pour mettre en œuvre une communication directe entre le troisième dispositif électronique et le deuxième dispositif électronique sans passer par le premier dispositif électronique ;
le premier dispositif électronique étant un terminal.

5. Premier dispositif électronique, **caractérisé en ce qu'**il comprend :
un premier module de réception (810), configuré pour recevoir des informations cibles envoyées par un deuxième dispositif électronique, les informations cibles étant des informations générées et envoyées par le deuxième dispositif électronique ; et
un premier module d'envoi (820), configuré pour envoyer les informations cibles à un troisième dispositif électronique, de sorte qu'une connexion de communication basée sur les informations cibles est établie entre le troisième dispositif électronique et le deuxième dispositif électronique ; la connexion de communication étant utilisée pour mettre en œuvre une communication directe entre le troisième dispositif électronique et le deuxième dispositif électronique sans passer par le premier dispositif électronique ;.
un deuxième module de réception, configuré pour recevoir une première entrée d'un utilisateur avant de recevoir les informations cibles envoyées par le deuxième dispositif électronique ;
un deuxième module d'envoi, configuré pour envoyer une demande d'autorisation au troisième dispositif électronique en réponse à la première entrée, dans lequel la demande d'autorisation est utilisée pour déterminer le troisième dispositif électronique comme étant un dispositif dans une connexion de communication avec le deuxième dispositif électronique ;
un troisième module de réception, configuré pour recevoir une réponse d'autorisation de confirmation renvoyée par le troisième dispositif électronique ; et
un premier module de détermination, configuré pour déterminer que le troisième dispositif électronique est un dispositif dans une connexion de communication avec le deuxième dispositif électronique, en réponse à la réponse d'autorisation de confirmation ;
dans lequel le premier dispositif électronique est un terminal.

6. Le premier dispositif électronique selon la revendication 5, dans lequel il existe une pluralité de deuxièmes dispositifs électroniques, la première entrée comprend une deuxième entrée, une troisième entrée et une quatrième entrée, et l'appareil comprend en outre un deuxième module de détermination, dans lequel
le deuxième module de réception est en outre configuré pour recevoir la deuxième entrée de l'utilisateur ;
le deuxième module de détermination est configuré pour déterminer un identifiant de type cible correspondant à un identifiant d'un deuxième dispositif électronique cible, en réponse à la deuxième entrée, dans lequel l'identifiant de type cible est un identifiant de type du deuxième dispositif électronique cible ;
le deuxième module de réception est en outre configuré pour recevoir la troisième entrée de l'utilisateur ;
le deuxième module de détermination est en outre configuré pour déterminer un identifiant d'un troisième dispositif électronique cible correspondant à l'identifiant de type cible, en réponse à la troisième entrée ;
et
le deuxième module de réception est en outre configuré pour recevoir la quatrième entrée de l'utilisateur, dans lequel la quatrième entrée est utilisée pour envoyer la demande d'autorisation au troisième dispositif électronique cible.

7. Le premier dispositif électronique selon l'une quelconque des revendications 5 à 6, comprenant en outre un troisième module de détermination, dans lequel
le troisième module de détermination est configuré pour effectuer une reconnaissance sémantique sur les informations cibles, et déterminer, sur la base d'un résultat de reconnaissance sémantique, un troisième dispositif électronique cible correspondant aux informations cibles ; et
le premier module d'envoi est en outre configuré pour envoyer les informations cibles au troisième dispositif électronique cible.

8. Un troisième dispositif électronique, **caractérisé en ce qu'**il comprend :
un quatrième module de réception (910), configuré pour recevoir une demande d'autorisation envoyée par un premier dispositif électronique, dans lequel la demande d'autorisation est utilisée pour déterminer un deuxième
dispositif électronique comme étant un dispositif dans une connexion de communication avec le troisième dispositif électronique ;
un premier module d'affichage (920), configuré pour afficher une interface d'autorisation en réponse à la demande d'autorisation ;
un cinquième module de réception (930), configuré pour recevoir une cinquième entrée effectuée par un utilisateur sur l'interface d'autorisation ;
un troisième module d'envoi (940), configuré pour envoyer une réponse d'autorisation de confirmation au premier dispositif électronique en réponse à la cinquième entrée ; et
un sixième module de réception (950), configuré pour recevoir des informations cibles envoyées par le premier dispositif électronique, dans lequel les informations cibles sont générées par le deuxième dispositif électronique, et les informations cibles sont envoyées par le deuxième dispositif électronique au premier dispositif électronique après que la réponse d'autorisation de confirmation est envoyée ;
dans lequel la connexion de communication est utilisée pour mettre en œuvre une communication directe entre le troisième dispositif électronique et le deuxième dispositif électronique sans passer par le premier dispositif électronique ;
dans lequel le premier dispositif électronique est un terminal.

9. Un support de stockage lisible, dans lequel le support de stockage lisible stocke un programme ou une instruction, et lorsque le programme ou l'instruction est exécuté par un processeur, le procédé d'envoi d'informations selon l'une quelconque des revendications 1 à 4 est mis en œuvre.

10. Un produit programme informatique, dans lequel le produit programme est stocké dans un support de stockage non transitoire, et le produit programme est exécuté par au moins un processeur pour mettre en œuvre le procédé d'envoi d'informations selon l'une quelconque des revendications 1 à 4.
